# EUROPEAN PATENT APPLICATION

(11) **EP 4 838 153 A1**
(43) Date of publication of application: **11.11.2026**
(21) Application number: 26747882.4
(22) Date of filing: 06.02.2026
(51) Int. Cl.: F25B 41/40, B23K 1/00, B23K 1/19, B23K 33/00, F24F 1/26, F25B 1/00

(54) **REFRIGERANT PIPING, REFRIGERATION DEVICE, AND METHOD FOR BRAZING REFRIGERANT PIPING**

(30) Priority: 10.03.2025 JP 2025037231
(71) Applicant: Daikin Industries, Ltd., Osaka-shi, Osaka 530-0001 (JP)
(72) Inventor: ONO, Asahi, Osaka-shi, Osaka 530-0001 (JP); ASHIDA, Keishi, Osaka-shi, Osaka 530-0001 (JP)
(74) Representative: Hoffmann Eitle
(86) International application number: PCT/JP2026/004314
(87) International publication number: WO 2026/191417

(57) **Abstract**

A refrigerant pipe that constitutes a refrigerant circuit 103 of a refrigeration apparatus 100 and through which a single refrigerant consisting of carbon dioxide or a mixed refrigerant including carbon dioxide flows includes a first pipe 111 made of stainless steel and having a first end 113, a second pipe 112 made of stainless steel and having a second end 114, and a connection portion 120 made of a material different from stainless steel and connecting the first end 113 and the second end 114, in which the connection portion 120 includes a first connection portion 10 joined to an outer peripheral surface 115 of the first end 113, a second connection portion 20 joined to an outer peripheral surface 116 of the second end 114, and a third connection portion 30 having an inner peripheral surface 31, the inner peripheral surface 31 on the first pipe 111 side is joined to an outer peripheral surface 12 of the first connection portion 10, and the inner peripheral surface 31 on the second pipe 112 side is joined to an outer peripheral surface 22 of the second connection portion 20.

## Description

### TECHNICAL FIELD

The present disclosure relates to a refrigerant pipe, a refrigeration apparatus, and a method of brazing a refrigerant pipe.

### BACKGROUND ART

Conventionally, a refrigerant pipe using stainless steel as a material is known (see PATENT LITERATURE 1).

### CITATION LIST

### [PATENT LITERATURE]

PATENT LITERATURE 1: Japanese Laid-Open Patent Publication No. 2010-151327

### SUMMARY OF THE INVENTION

### [TECHNICAL PROBLEM]

In the refrigerant pipe, work of brazing pipes to each other manually occurs during manufacturing and maintenance. In a case where the refrigerant pipe is made of stainless steel, since it is necessary to remove an oxide film and the like, the manual brazing work between pipes becomes complicated.

An object of the present disclosure is to facilitate manual brazing between pipes in a refrigerant pipe made of stainless steel.

### [SOLUTION TO PROBLEM]

(1) A refrigerant pipe of the present disclosure that constitutes a refrigerant circuit of a refrigeration apparatus and through which a single refrigerant consisting of carbon dioxide or a mixed refrigerant including carbon dioxide flows includes a first pipe made of stainless steel and having a first end, a second pipe made of stainless steel and having a second end, and a connection portion made of a material different from stainless steel and connecting the first end and the second end, in which the connection portion includes a first connection portion joined to an outer peripheral surface of the first end, a second connection portion joined to an outer peripheral surface of the second end, and a third connection portion having an inner peripheral surface, the inner peripheral surface on the first pipe side is joined to an outer peripheral surface of the first connection portion, and the inner peripheral surface on the second pipe side is joined to an outer peripheral surface of the second connection portion.
   In the refrigerant pipe of the present disclosure, the first pipe and the second pipe made of stainless steel can be easily brazed manually by providing the connection portion having a simple structure. Accordingly, the refrigerant pipe of the present disclosure facilitates manual brazing work of pipes in the refrigerant pipe made of stainless steel.
(2) In the refrigerant pipe according to (1) of the present disclosure, an end surface of the first connection portion on the second connection portion side is preferably flush with an end surface of the first pipe on the second pipe side, or protrudes toward the second pipe side from the end surface of the first pipe on the second pipe side, and an end surface of the second connection portion on the first connection portion side is preferably flush with an end surface of the second pipe on the first pipe side, or protrudes toward the first pipe side from the end surface of the second pipe on the first pipe side.
   In the refrigerant pipe having the above configuration, by reducing the gap between the first connection portion and the second connection portion, it is possible to prevent the brazing material from entering the inside of the refrigerant pipe from between the first connection portion and the second connection portion when the third connection portion is brazed to the first connection portion and the second connection portion.
(3) In the refrigerant pipe according to (2) of the present disclosure, the end surface of the first pipe is preferably in contact with the end surface of the second pipe.
   The refrigerant pipe having the above configuration can prevent the brazing material from entering the inside of the refrigerant pipe from between the first pipe and the second pipe when the third connection portion is brazed to the first connection portion and the second connection portion by bringing the first pipe and the second pipe into contact with each other.
(4) In the refrigerant pipe according to the aspect (1) of the present disclosure, the third connection portion preferably has a protrusion protruding inward in a radial direction from the inner peripheral surface, the protrusion preferably has a first surface formed on one side in the axial direction of the third connection portion and a second surface formed on another side in the axial direction, the first surface preferably faces the end surface of the first connection portion on the second connection portion side, and the second surface preferably faces the end surface of the second connection portion on the first connection portion side.
   In the refrigerant pipe having the above configuration, the first connection portion and the second connection portion can be positioned in the axial direction by the protrusion.
(5) In the refrigerant pipe according to the aspect (4) of the present disclosure, a height of the protrusion protruding inward in the radial direction from the inner peripheral surface of the third connection portion is preferably equal to or less than a thickness of the first connection portion and the second connection portion in the radial direction.
   The refrigerant pipe having the above configuration can prevent the protrusion from coming into contact with the first pipe and the second pipe. Accordingly, the first connection portion and the second connection portion can be reliably positioned.
(6) In the refrigerant pipe according to the aspect (4) or (5) of the present disclosure, the end surface of the first pipe preferably protrudes toward the second pipe side from the end surface of the first connection portion on the second connection portion side, and the end surface of the second pipe protrudes toward the first pipe side from the end surface of the second connection portion on the first connection portion side.
   The refrigerant pipe having the above configuration can suppress the gap between the first pipe and the second pipe. As a result, it is possible to prevent the brazing material from entering the inside of the refrigerant pipe through the gap.
(7) In the refrigerant pipe according to any of the aspects (1) to (6) of the present disclosure, the third connection portion preferably has a flared portion formed at an axial end.
   In the refrigerant pipe of the present disclosure, when the first connection portion and the second connection portion are brazed to the third connection portion, the brazing material is easily poured into the gap between the first connection portion and the second connection portion, and the third connection portion.
(8) In the refrigerant pipe according to any of the aspects (1) to (7) of the present disclosure, an axial length of the third connection portion is preferably equal to or less than a sum of an axial length of the first connection portion and an axial length of the second connection portion, and is preferably equal to or greater than the axial length of the first connection portion and the axial length of the second connection portion.
   The refrigerant pipe of the present disclosure can efficiently perform brazing work between the first connection portion and the second connection portion, and the third connection portion.
(9) A refrigeration apparatus of the present disclosure includes the refrigerant pipe according to any of aspects (1) to (8).
   The refrigeration apparatus of the present disclosure can improve pressure resistance strength of the connection portion of the refrigerant pipe by using the refrigerant pipe having the third connection portion. As a result, the refrigeration apparatus can be configured by using a refrigerant pipe made of stainless steel that secures the pressure resistance strength required in the case of using a single refrigerant including carbon dioxide or a mixed refrigerant including carbon dioxide.
(10) A method of brazing a refrigerant pipe of the present disclosure is a method of brazing a refrigerant pipe including a first pipe made of stainless steel and having a first end, a second pipe made of stainless steel and having a second end, and a connection portion made of a material different from stainless steel and connecting the first end and the second end, and through which a single refrigerant consisting of carbon dioxide or a mixed refrigerant including carbon dioxide flows, in which the connection portion includes a first connection portion joined to an outer peripheral surface of the first end, a second connection portion joined to an outer peripheral surface of the second end, and a third connection portion having an inner peripheral surface, the inner peripheral surface on the first pipe side is joined to an outer peripheral surface of the first connection portion, the inner peripheral surface on the second pipe side is joined to an outer peripheral surface of the second connection portion, and the method includes brazing the first pipe including the first connection portion and the second pipe including the second connection portion via the third connection portion.

In the method of brazing the refrigerant pipe of the present disclosure, the first pipe and the second pipe made of stainless steel can be easily brazed manually by the connection portion having a simple structure. Accordingly, the method of brazing the refrigerant pipe of the present disclosure facilitates manual brazing work of pipes in the refrigerant pipe made of stainless steel.

In the method of brazing the refrigerant pipe of the present disclosure, the pressure resistance strength of the connection portion can be improved by brazing the first connection portion and the second connection portion by using the third connection portion. As a result, the method of brazing of the present disclosure can secure the necessary pressure resistance strength for the refrigerant pipe through which the single refrigerant including carbon dioxide or the mixed refrigerant including carbon dioxide flows.

### BRIEF DESCRIPTION OF DRAWINGS

[FIG. 1] FIG. 1 is a schematic diagram of a refrigeration apparatus according to an embodiment of the present disclosure.
[FIG. 2] FIG. 2 is a schematic sectional view illustrating a connection portion of a refrigerant pipe according to a first embodiment.
[FIG. 3] FIG. 3 is a schematic sectional view generally illustrating a status (before brazing) of the connection portion of the refrigerant pipe according to the first embodiment.
[FIG. 4] FIG. 4 is a schematic sectional view generally illustrating a status (during brazing) of the connection portion of the refrigerant pipe according to the first embodiment.
[FIG. 5] FIG. 5 is a schematic sectional view illustrating a connection portion of a refrigerant pipe according to a second embodiment.
[FIG. 6] FIG. 6 is an enlarged schematic sectional view of the connection portion of the refrigerant pipe according to the second embodiment.
[FIG. 7] FIG. 7 is a schematic sectional view generally illustrating a status (during brazing) of the connection portion of the refrigerant pipe according to the second embodiment.

### DETAILED DESCRIPTION

Hereinafter, a refrigerant pipe of the present disclosure and a refrigeration apparatus including the refrigerant pipe will be described in detail with reference to the accompanying drawings. Note that the present disclosure should not be limited to the following exemplifications, and is intended to be illustrated by the claims and include meanings equivalent to the claims and any modification recited in the claims.

### [Overall configuration of refrigeration apparatus]

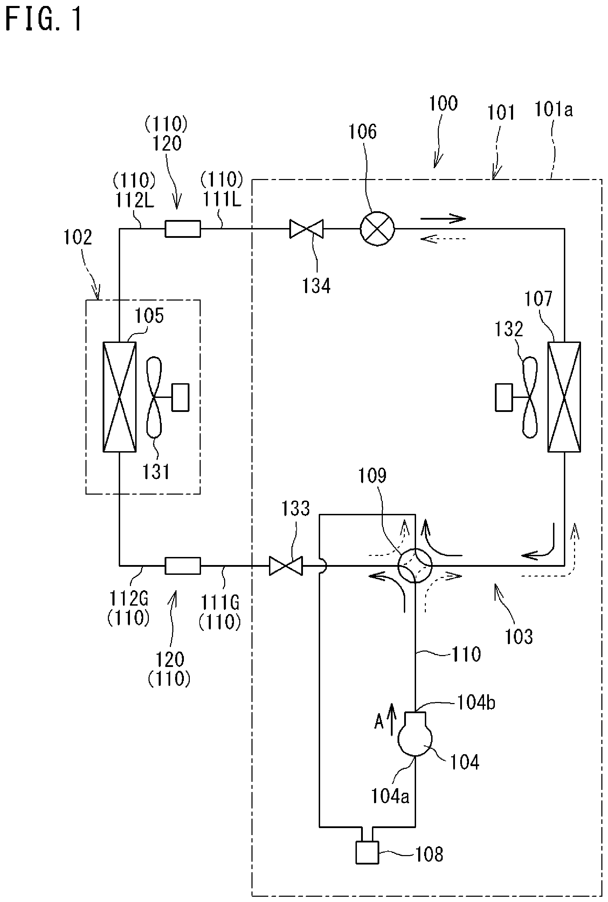

FIG. 1 is a schematic diagram of a refrigeration apparatus according to an embodiment of the present disclosure. A refrigeration apparatus 100 according to the present embodiment is an air conditioner that adjusts temperature and humidity in an air-conditioned room by a vapor compression refrigeration cycle. The refrigeration apparatus 100 includes an outdoor unit 101 installed outside the room, and an indoor unit 102 installed in the room. The outdoor unit 101 and the indoor unit 102 are connected to each other by a refrigerant pipe 110. Note that although the present embodiment exemplifies the refrigeration apparatus 100 including one indoor unit 102, the refrigeration apparatus 100 of the present disclosure may include two or more indoor units 102. The refrigeration apparatus 100 according to the present embodiment is an air conditioner, but the refrigeration apparatus of the present disclosure is not limited to the air conditioner, and may be a refrigerator, a freezer, a hot water supplier, or the like.

The refrigeration apparatus 100 includes a refrigerant circuit 103 that executes a vapor compression refrigeration cycle. The refrigerant circuit 103 includes a plurality of element components and a refrigerant pipe 110 connecting the plurality of element components. The refrigerant pipe 110 includes a connection portion 120. Note that the configuration of the connection portion 120 will be described later in detail.

The refrigerant circuit 103 includes, as the plurality of element components, a compressor 104 that compresses a refrigerant to generate a high-temperature and high-pressure gas refrigerant, a plurality of indoor heat exchangers 105, an expansion valve 106 that decompresses the refrigerant, an outdoor heat exchanger 107, an accumulator 108, a four-way switching valve 109, and the like, which are connected by the refrigerant pipe 110.

The refrigeration apparatus 100 of the present disclosure uses, as the refrigerant, a single refrigerant consisting of carbon dioxide or a mixed refrigerant containing carbon dioxide (so-called natural refrigerant). The refrigerant flowing in the refrigerant circuit 103 has a pressure of 4.0 MPa or more (for example, about 8 to 14 MPa). Therefore, the refrigerant pipe 110 used in the refrigeration apparatus 100 has strength enough to withstand a pressure of 4.0 MPa or more. The refrigerant pipe 110 used in the refrigeration apparatus 100 is mostly made of stainless steel, and partially includes a portion made of a material (for example, copper) other than stainless steel. Therefore, the refrigerant pipe 110 of the present disclosure has higher pressure resistance strength than a refrigerant pipe used in a refrigerant circuit using a refrigerant such as R32 or R410A. The stainless steel used for the refrigerant pipe 110 according to the present embodiment is austenitic stainless steel such as SUS304 or SUS304L, or ferritic stainless steel such as SUS430, SUS436L, or SUS444. In the present embodiment, most (substantially all) of the refrigerant pipe 110 constituting the refrigerant circuit 103 is made of stainless steel. However, in the refrigeration apparatus 100 of the present disclosure, a part of the refrigerant pipe 110 constituting the refrigerant circuit 103 may be made of stainless steel.

The compressor 104 compresses a low-pressure gas refrigerant and discharges a high-pressure gas refrigerant. The compressor 104 has a suction port or a suction portion 104a and a discharge port or a discharge portion 104b. The low-pressure gas refrigerant is sucked through the suction portion 104a. The high-pressure gas refrigerant is discharged from the discharge portion 104b in a direction of arrow A. Examples of the compressor 104 include various compressors such as a scroll compressor. The compressor 104 is housed in a casing 101a of the outdoor unit 101. The accumulator 108 is provided on the refrigerant pipe 110 on a suction side of the compressor 104.

The indoor heat exchanger 105 is provided in the indoor unit 102 and executes heat exchange between the refrigerant and indoor air. Examples of the indoor heat exchanger 105 include a fin-and-tube heat exchanger of a cross-fin type and a heat exchanger of a microchannel type. An indoor fan 131 is disposed near the indoor heat exchanger 105. The indoor fan 131 blows the indoor air to the indoor heat exchanger 105 and sends conditioned air into the room.

The expansion valve 106 is disposed in the refrigerant pipe 110 between the outdoor heat exchanger 107 and the indoor heat exchanger 105. The expansion valve 106 expands the passing refrigerant to decompress the refrigerant to a predetermined pressure. The expansion valve 106 according to the present embodiment is an electronic expansion valve.

The outdoor heat exchanger 107 executes heat exchange between the refrigerant and outdoor air. Examples of the outdoor heat exchanger 107 include a fin-and-tube heat exchanger of a cross-fin type and a heat exchanger of a microchannel type. An outdoor fan 132 is disposed near the outdoor heat exchanger 107. The outdoor fan 132 blows the outdoor air to the outdoor heat exchanger 107.

The refrigerant pipe 110 is provided with the four-way switching valve 109 for switching a refrigerant flow path, a gas shutoff valve 133, and a liquid shutoff valve 134. By switching the four-way switching valve 109, the refrigeration apparatus 100 can reverse a flow of the refrigerant, and switch the refrigerant discharged from the compressor 104 to be supplied to the outdoor heat exchanger 107 or the indoor heat exchanger 105, and thus an operation can be switched between a cooling operation and a heating operation.

The gas shutoff valve 133 and the liquid shutoff valve 134 open or close a refrigerant path. The opening and closing are performed manually, for example. When the refrigeration apparatus 100 is installed, the gas shutoff valve 133 and the liquid shutoff valve 134 are closed to prevent the refrigerant enclosed in the outdoor unit 101 from leaking outside, for example. On the other hand, when the refrigeration apparatus 100 is used, the gas shutoff valve 133 and the liquid shutoff valve 134 are opened.

During the heating operation of the refrigeration apparatus 100, by switching the four-way switching valve 109 as indicated by a solid line, the refrigerant flows in a direction indicated by an arrow of the solid line. As a result, the high-pressure gas refrigerant discharged from the compressor 104 in the direction of arrow A passes through the four-way switching valve 109, then passes through the gas shutoff valve 133 that is opened, and then enters the indoor heat exchanger 105. The high-pressure gas refrigerant radiates heat while the high-pressure gas refrigerant turns into a high-pressure liquid refrigerant in the indoor heat exchanger 105. The high-pressure liquid refrigerant reaches the expansion valve 106 via the liquid shutoff valve 134 that is opened, and is decompressed by the expansion valve 106. The decompressed refrigerant reaches the outdoor heat exchanger 107, absorbs heat in the outdoor heat exchanger 107, and turns into a low-pressure gas refrigerant. The low-pressure gas refrigerant is suctioned into the compressor 104 via the four-way switching valve 109 and the accumulator 108. During the heating operation, the indoor heat exchanger 105 functions as a radiator, and the outdoor heat exchanger 107 functions as a heat absorber.

On the other hand, during the cooling operation, the flow of the refrigerant is reversed by switching the four-way switching valve 109 as indicated by a dotted line, and the refrigerant flows in a direction indicated by an arrow of the dotted line. As a result, the high-pressure gas refrigerant discharged from the compressor 104 in the direction of arrow A passes through the four-way switching valve 109, and then enters the outdoor heat exchanger 107. The high-pressure gas refrigerant radiates heat while the high-pressure gas refrigerant turns into a high-pressure liquid refrigerant in the outdoor heat exchanger 107. The high-pressure liquid refrigerant reaches the expansion valve 106 and is decompressed by the expansion valve 106. The decompressed refrigerant reaches the indoor heat exchanger 105 via the opened liquid shutoff valve 134, absorbs heat in the indoor heat exchanger 105, and turns into a low-pressure gas refrigerant. The low-pressure gas refrigerant is suctioned into the compressor 104 via the gas shutoff valve 133 that is opened, the four-way switching valve 109, and the accumulator 108. During the cooling operation, the indoor heat exchanger 105 functions as a heat absorber, and the outdoor heat exchanger 107 functions as a radiator.

### [Refrigerant pipe]

As illustrated in FIG. 1, in the refrigeration apparatus 100 of the present disclosure, the refrigerant pipe 110 includes a first pipe 111 and a second pipe 112. The refrigerant pipe 110 further includes a connection portion 120 that connects the first pipe 111 and the second pipe 112. The first pipe 111, the second pipe 112, and the connection portion 120 constitute a part of the refrigerant circuit 103.

The first pipe 111 includes the refrigerant pipe 110 disposed inside the outdoor unit 101 and the refrigerant pipe 110 connecting the outdoor unit 101 and the connection portion 120. The first pipe 111 includes a first liquid refrigerant pipe 111L and a first gas refrigerant pipe 111G. Liquid refrigerant flows through the first liquid refrigerant pipe 111L, and gas refrigerant flows through the first gas refrigerant pipe 111G.

The second pipe 112 is the refrigerant pipe 110 that connects the indoor unit 102 and the connection portion 120. The second pipe 112 includes a second liquid refrigerant pipe 112L and a second gas refrigerant pipe 112G. Liquid refrigerant flows through the second liquid refrigerant pipe 112L, and gas refrigerant flows through the second gas refrigerant pipe 112G.

In the refrigerant pipe 110 of the present disclosure, the first pipe 111 and the second pipe 112 are made of stainless steel, and the connection portion 120 is made of a material different from stainless steel. In the present embodiment, each member constituting the connection portion 120 is made of copper. The member constituting the connection portion 120 may be made of a material other than copper.

As illustrated in FIG. 1, in the refrigeration apparatus 100 of the present disclosure, the refrigerant pipe 110 includes two connection portions 120. The refrigerant pipe 110 of the present disclosure may include three or more connection portions 120. In the present embodiment, the connection portion 120 is used for connecting the outdoor unit 101 and the indoor unit 102, but the use of the connection portion 120 of the present disclosure is not limited to this use, and may be, for example, a part of an internal pipe in the outdoor unit 101 and the indoor unit 102.

In the refrigeration apparatus 100 of the present disclosure, one of the two connection portions 120 connects the first liquid refrigerant pipe 111L and the second liquid refrigerant pipe 112L, and the other one of the two connection portions 120 connects the first gas refrigerant pipe 111G and the second gas refrigerant pipe 112G.

### [Refrigerant pipe and connection portion]

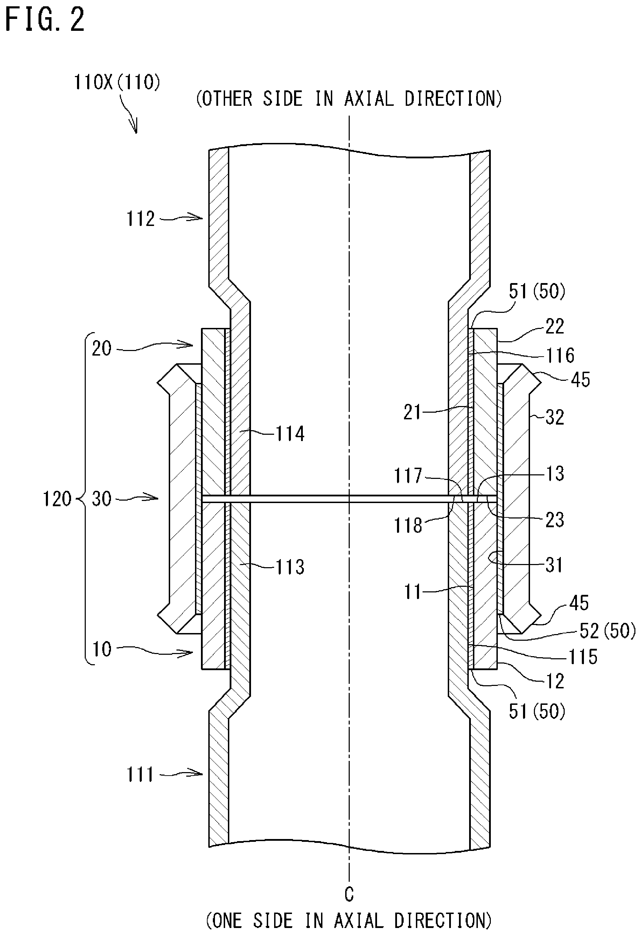

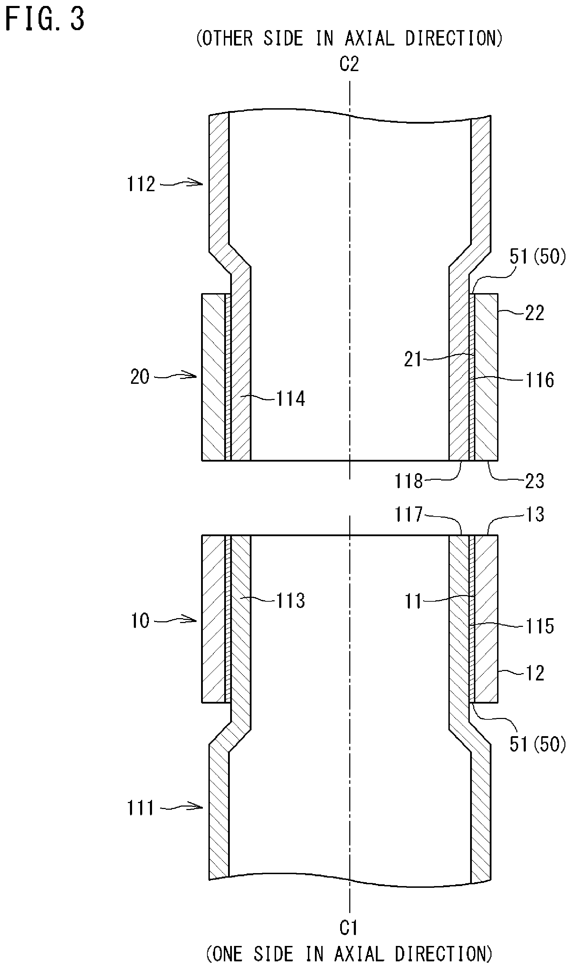

FIG. 2 is a schematic sectional view illustrating a connection portion of a refrigerant pipe according to a first embodiment. FIG. 3 is a schematic sectional view generally illustrating a status (before brazing) of the connection portion of the refrigerant pipe according to the first embodiment. FIG. 2 illustrates the first embodiment of the refrigerant pipe 110 of the present disclosure. In the following description, the refrigerant pipe 110 according to the first embodiment is also referred to as a first refrigerant pipe 110X. In this description, in a case where simply referred to as the refrigerant pipe 110, a common configuration in the first refrigerant pipe 110X and the refrigerant pipe 110 according to the other embodiments (a second refrigerant pipe 110Y to be described later) will be described.

As illustrated in FIG. 2, the connection portion 120 of the refrigerant pipe 110 of the present disclosure includes a first connection portion 10, a second connection portion 20, and a third connection portion 30.

Each direction is defined with respect to the refrigerant pipe 110 of the present disclosure. A direction along a central axis C of the refrigerant pipe 110 is an "axial direction". Note that the "axial direction" includes a direction parallel to the central axis C. In the refrigerant pipe 110, one side in the axial direction (lower side in FIG. 2) is a lower side, and the other side in the axial direction (upper side in FIG. 2) opposite to the lower side is an upper side. A direction orthogonal to the central axis C is a "radial direction", and a direction along a circle centered on the central axis C is a "circumferential direction".

As illustrated in FIGS. 2 and 3, the first connection portion 10 is constituted by a cylindrical member, and has an inner peripheral surface 11, an outer peripheral surface 12, and an end surface 13. The first connection portion 10 is constituted by a material different from stainless steel. The first connection portion 10 illustrated in the present embodiment is made of copper. Note that the first connection portion 10 may be constituted by a material other than copper. The first connection portion 10 is joined to an end 113 of the first pipe 111, for example, by in-furnace brazing. In this description, the end 113 of the first pipe 111 is also referred to as the first end 113. The connection portion 120 includes a layer of a brazing material 50 formed between the inner peripheral surface 11 of the first connection portion 10 and the outer peripheral surface 115 of the first end 113. The first connection portion 10 and the first pipe 111 are joined by a layer of the brazing material 50 formed between the inner peripheral surface 11 and the outer peripheral surface 115. In this description, the layer of the brazing material 50 formed by in-furnace brazing is referred to as a first brazing material layer 51.

The second connection portion 20 is constituted by a cylindrical member, and has an inner peripheral surface 21, an outer peripheral surface 22, and an end surface 23. The second connection portion 20 is constituted by a material different from stainless steel. The second connection portion 20 illustrated in the present embodiment is made of copper. Note that the second connection portion 20 may be constituted by a material other than copper. The second connection portion 20 is joined to an end 114 of the second pipe 112, for example, by in-furnace brazing. In this description, the end 114 of the second pipe 112 is also referred to as the second end 114. The connection portion 120 includes the first brazing material layer 51 formed between the inner peripheral surface 21 of the second connection portion 20 and the outer peripheral surface 116 of the second end 114. The second connection portion 20 and the second pipe 112 are joined by the first brazing material layer 51 formed between the inner peripheral surface 21 and the outer peripheral surface 116.

The third connection portion 30 is constituted by a cylindrical member, and has an inner peripheral surface 31 and an outer peripheral surface 32. The third connection portion 30 is constituted by a material different from stainless steel. The third connection portion 30 illustrated in the present embodiment is made of copper. Note that the third connection portion 30 may be constituted by a material other than copper. The third connection portion 30 is provided by manually brazing the first connection portion 10 provided at the first end 113 and the second connection portion 20 provided at the second end 114 with a burner. The connection portion 120 includes a layer of the brazing material 50 formed between the outer peripheral surface 12 and the inner peripheral surface 31 and between the outer peripheral surface 22 and the inner peripheral surface 31. The first connection portion 10 and the third connection portion 30 are joined by the layer of the brazing material 50 formed between the outer peripheral surface 12 and the inner peripheral surface 31. The second connection portion 20 and the third connection portion 30 are joined by the layer of the brazing material 50 formed between the outer peripheral surface 22 and the inner peripheral surface 31. In this description, a layer of the brazing material 50 formed by manual brazing with a burner is referred to as a second brazing material layer 52. In the connection portion 120 according to the present embodiment, different brazing materials 50 are used for the first brazing material layer 51 and the second brazing material layer 52. Note that the same brazing material 50 may be used for the first brazing material layer 51 and the second brazing material layer 52.

### (First embodiment of connection portion)

As illustrated in FIGS. 2 and 3, in the connection portion 120 of the first refrigerant pipe 110X, the end surface 13 of the first connection portion 10 on the second connection portion 20 side is flush with the end surface 117 of the first pipe 111 on the second pipe 112 side, and the end surface 23 of the second connection portion 20 on the first connection portion 10 side is flush with the end surface 118 of the second pipe 112 on the first pipe 111 side.

In the first refrigerant pipe 110X having such a configuration, since the first connection portion 10 and the second connection portion 20 can bring the end surface 13 into contact with the end surface 23 without being obstructed by the first pipe 111 and the second pipe 112, a gap between the first connection portion 10 and the second connection portion 20 can be reduced. In the first refrigerant pipe 110X, by reducing the gap between the first connection portion 10 and the second connection portion 20, it is possible to prevent the brazing material 50 constituting the second brazing material layer 52 from entering the inside of the first refrigerant pipe 110X through a gap between the end surface 13 and the end surface 23.

Although the first refrigerant pipe 110X illustrated in FIG. 2 has a gap between the end surface 117 of the first pipe 111 and the end surface 118 of the second pipe 112, the end surface 117 and the end surface 118 are preferably in contact with each other in the first refrigerant pipe 110X of the present disclosure. In the first refrigerant pipe 110X, a gap between the end surface 117 and the end surface 118 can be substantially eliminated by bringing the first pipe 111 and the second pipe 112 into contact with each other. In this case, when the third connection portion 30 is brazed to the first connection portion 10 and the second connection portion 20, it is possible to prevent the brazing material 50 from entering the inside of the first refrigerant pipe 110X through the gap between the end surface 117 and the end surface 118.

The connection portion 120 in the first refrigerant pipe 110X may be configured such that the end surface 13 of the first connection portion 10 on the second connection portion 20 side protrudes toward the second pipe 112 side from the end surface 117 of the first pipe 111 on the second pipe 112 side, and the end surface 23 of the second connection portion 20 on the first connection portion 10 side protrudes toward the first pipe 111 side from the end surface 118 of the second pipe 112 on the first pipe 111 side. In such a configuration, the first connection portion 10 and the second connection portion 20 can bring the end surface 13 into contact with the end surface 23 without being obstructed by the first pipe 111 and the second pipe 112.

The refrigeration apparatus 100 (see FIG. 1) configured by using the refrigerant pipe 110 including the third connection portion 30 can improve the pressure resistance strength of the connection portion 120 of the refrigerant pipe 110, and thus, a single refrigerant consisting of carbon dioxide or a mixed refrigerant containing carbon dioxide can be used.

### [Method for brazing first refrigerant pipe]

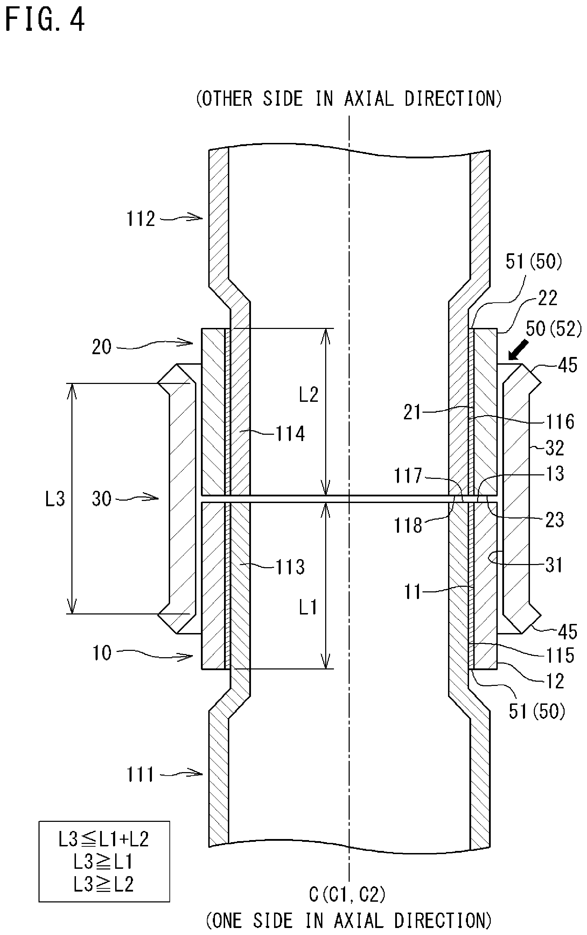

FIG. 4 is a schematic sectional view generally illustrating a status (during brazing) of the connection portion of the refrigerant pipe according to the first embodiment. Here, a method of brazing the connection portion 120 in the first refrigerant pipe 110X will be described. As illustrated in FIG. 4, when the first refrigerant pipe 110X is brazed, the first connection portion 10 is inserted into the cylindrical third connection portion 30 from one side in the axial direction and the second connection portion 20 is inserted into the third connection portion 30 from the other side in the axial direction, and the first pipe 111 and the second pipe 112 are disposed such that a central axis C1 and a central axis C2 are coaxial. In the refrigerant pipe 110, the central axis C of the refrigerant pipe 110 coincides with the central axis C1 of the first pipe 111 and the central axis C2 of the second pipe 112.

Next, in this state, the molten brazing material 50 is inserted between the outer peripheral surface 12 and the outer peripheral surface 22, and the inner peripheral surface 31. As a result, the second brazing material layer 52 is formed between the outer peripheral surface 12 and the outer peripheral surface 22, and the inner peripheral surface 31. Thus, the first pipe 111 including the first connection portion 10 and the second pipe 112 including the second connection portion 20 can be joined via the third connection portion 30 by manually brazing with a burner. The connection portion 120 in the first refrigerant pipe 110X is brazed manually with a burner, preferably in an orientation in which the central axis C is directed in a vertical direction as illustrated in FIG. 4. However, not limited to this orientation, the brazing may be performed in an orientation in which the central axis C is directed in a horizontal direction or an orientation in which the central axis C is inclined with respect to the vertical direction.

As illustrated in FIGS. 2 and 4, in the first refrigerant pipe 110X, the third connection portion 30 has a flared portion 45 formed at an end in the axial direction. In the first refrigerant pipe 110X having such a configuration, when the first connection portion 10 and the second connection portion 20 are brazed to the third connection portion 30, the molten brazing material 50 is easily poured between the outer peripheral surface 12 and the outer peripheral surface 22, and the inner peripheral surface 31. Therefore, in the first refrigerant pipe 110X having such a configuration, manual brazing with a burner can be efficiently performed.

As illustrated in FIG. 4, in the first refrigerant pipe 110X according to the present embodiment, an axial length L3 of the third connection portion 30 is equal to or less than a sum of an axial length L1 of the first connection portion 10 and an axial length L2 of the second connection portion 20 (L3 ≤ L1+L2), and is equal to or greater than the axial length L1 of the first connection portion 10 and the axial length L2 of the second connection portion 20 (L3 ≥ L1 and L3 ≥ L2).

For example, in a case where the axial length L3 of the third connection portion 30 is excessively short, it is difficult to secure a connection strength between the first connection portion 10 and the second connection portion 20 by the third connection portion 30. Therefore, the axial length L3 of the third connection portion 30 is preferably long from the viewpoint of securing the connection strength. On the other hand, in a case where the axial length L3 of the third connection portion 30 is excessively long, the amount of the brazing material 50 required for forming the second brazing material layer 52 increases, and thus, brazing work of the third connection portion 30, the first connection portion 10, and the second connection portion 20 takes time and effort. Since the first refrigerant pipe 110X according to the present embodiment has the above-described dimensional relationship, it is possible to suppress time and effort required for the brazing work of the third connection portion 30, the first connection portion 10, and the second connection portion 20 while securing the connection strength of the first connection portion 10 and the second connection portion 20 by the third connection portion 30.

As illustrated in FIGS. 2 to 4, the first refrigerant pipe 110X includes the first pipe 111 made of stainless steel and having the first end 113, the second pipe 112 made of stainless steel and having the second end 114, and the connection portion 120 made of copper and connecting the first end 113 and the second end 114. The first refrigerant pipe 110X is a refrigerant pipe 110 through which a single refrigerant consisting of carbon dioxide or a mixed refrigerant containing carbon dioxide flows. In the first refrigerant pipe 110X connected by the brazing method of the present embodiment, the connection portion 120 includes a first connection portion 10 joined to the outer peripheral surface 115 of the first end portion 113, a second connection portion 20 joined to the outer peripheral surface 116 of the second end portion 114, and a third connection portion 30 in which the inner peripheral surface 31 on the first pipe 111 side is joined to the outer peripheral surface 12 of the first connection portion 10 and the inner peripheral surface 31 on the second pipe 112 side is joined to the outer peripheral surface 22 of the second connection portion 20.

Therefore, in the method of brazing the first refrigerant pipe 110X according to the present embodiment, the first pipe 111 and the second pipe 112 made of stainless steel can be easily brazed manually with a burner by the connection portion 120 having a simple structure. The method of brazing according to the present embodiment facilitates manual brazing work of pipes in the first refrigerant pipe 110X made of stainless steel. In the method of brazing according to the present embodiment, the pressure resistance strength of the connection portion 120 can be improved by brazing the first connection portion 10 and the second connection portion 20 by using the third connection portion 30. Such a method of brazing can secure the necessary pressure resistance strength for the first refrigerant pipe 110X through which the single refrigerant consisting of carbon dioxide or the mixed refrigerant containing carbon dioxide flows.

### (Second embodiment of connection portion)

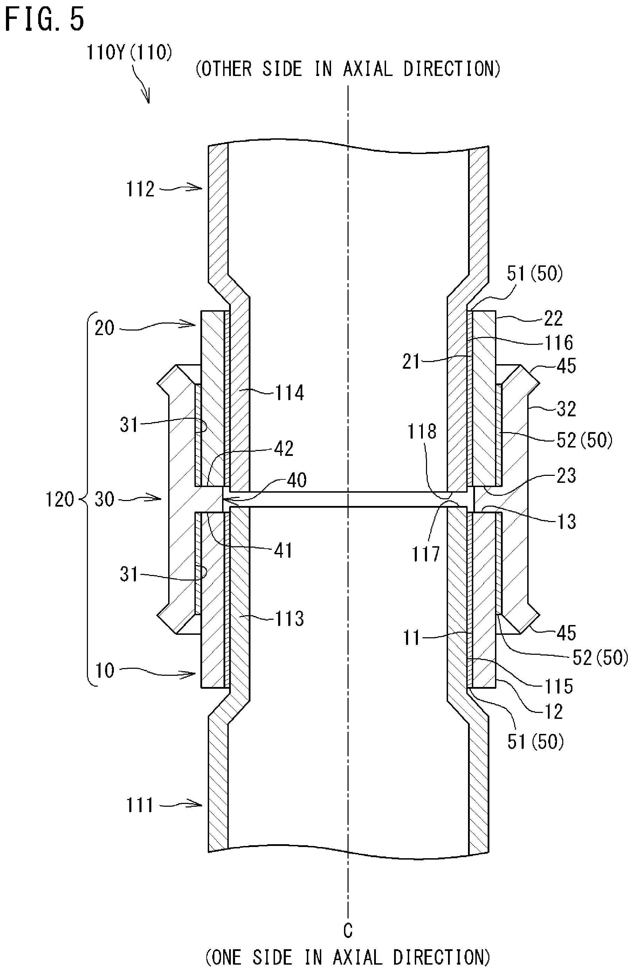

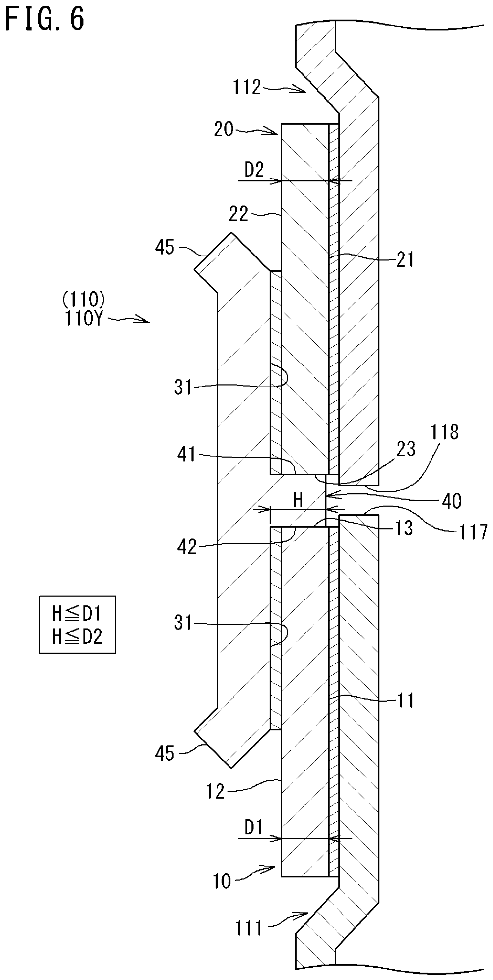

FIG. 5 is a schematic sectional view illustrating a connection portion of a refrigerant pipe according to a second embodiment. FIG. 6 is an enlarged schematic sectional view of the connection portion of the refrigerant pipe according to the second embodiment. FIGS. 5 and 6 illustrate a refrigerant pipe 110 according to the second embodiment. In the following description, the refrigerant pipe 110 according to the second embodiment is also referred to as a second refrigerant pipe 110Y. As illustrated in FIGS. 5 and 6, the connection portion 120 of the refrigerant pipe 110Y includes the first connection portion 10, the second connection portion 20, and the third connection portion 30. The third connection portion 30 includes a protrusion 40. The second refrigerant pipe 110Y is different from the first refrigerant pipe 110X (see FIG. 2) in that the third connection portion 30 includes the protrusion 40.

The protrusion 40 is a substantially annular portion protruding inward in the radial direction from the inner peripheral surface 31 of the third connection portion 30. The protrusion 40 is formed at a center of the third connection portion 30 in the axial direction. The protrusion 40 has an annular first surface 41 formed on one side in the axial direction of the third connection portion 30 and an annular second surface 42 formed on the other side in the axial direction of the third connection portion 30. In the connection portion 120, the first surface 41 faces the end surface 13 of the first connection portion 10, and the second surface 42 faces the end surface 23 of the second connection portion 20.

The first connection portion 10 is positioned in the axial direction by being inserted into the third connection portion 30 to a position where the end surface 13 abuts on the first surface 41. The second connection portion 20 is positioned in the axial direction by being inserted into the third connection portion 30 to a position where the end surface 23 abuts on the second surface 42. In the second refrigerant pipe 110Y having such a configuration, the first connection portion 10 and the second connection portion 20 can be positioned in the axial direction by the protrusion 40.

As illustrated in FIGS. 5 and 6, in the second refrigerant pipe 110Y, the end surface 117 of the first pipe 111 protrudes toward the second pipe 112 side from the end surface 13 of the first connection portion 10 on the second connection portion 20 side, and the end surface 118 of the second pipe 112 protrudes toward the first pipe 111 side from the end surface 23 of the second connection portion 20 on the first connection portion 10 side. The second refrigerant pipe 110Y is further different from the first refrigerant pipe 110X in this point.

The second refrigerant pipe 110Y having such a configuration can suppress a gap between the first pipe 111 and the second pipe 112. As a result, it is possible to prevent the brazing material 50 from entering the inside of the second refrigerant pipe 110Y through the gap.

As illustrated in FIG. 6, in the second refrigerant pipe 110Y, a height H of the protrusion 40 protruding inward in the radial direction from the inner peripheral surface 31 of the third connection portion 30 is equal to or less than a thickness D1 of the first connection portion 10 in the radial direction and equal to or less than a thickness D2 of the second connection portion 20 in the radial direction (H ≤ D1 and H ≤ D2).

The second refrigerant pipe 110Y of the present embodiment having such a configuration can prevent the protrusion 40 from coming into contact with the first pipe 111 and the second pipe 112. Thus, the first pipe 111 and the second pipe 112 can be reliably connected by the connection portion 120 including the protrusion 40.

Although not illustrated, in the second refrigerant pipe 110Y according to the present embodiment, as in the first refrigerant pipe 110X (see FIG. 2) described above, the axial length L3 of the third connection portion 30 is equal to or less than the length (L3 ≤ L1+L2) obtained by adding the axial length L1 of the first connection portion 10 and the axial length L2 of the second connection portion 20, and equal to or greater than the axial length L1 of the first connection portion 10 and the axial length L2 of the second connection portion 20 (L3 ≥ L1 and L3 ≥ L2). Therefore, the second refrigerant pipe 110Y according to the present embodiment can suppress time and effort required for brazing work between the third connection portion 30 and the first connection portion 10, and the second connection portion 20 while securing the connection strength between the third connection portion 30, and the first connection portion 10 and the second connection portion 20 by the third connection portion 30.

### [Method of brazing second refrigerant pipe]

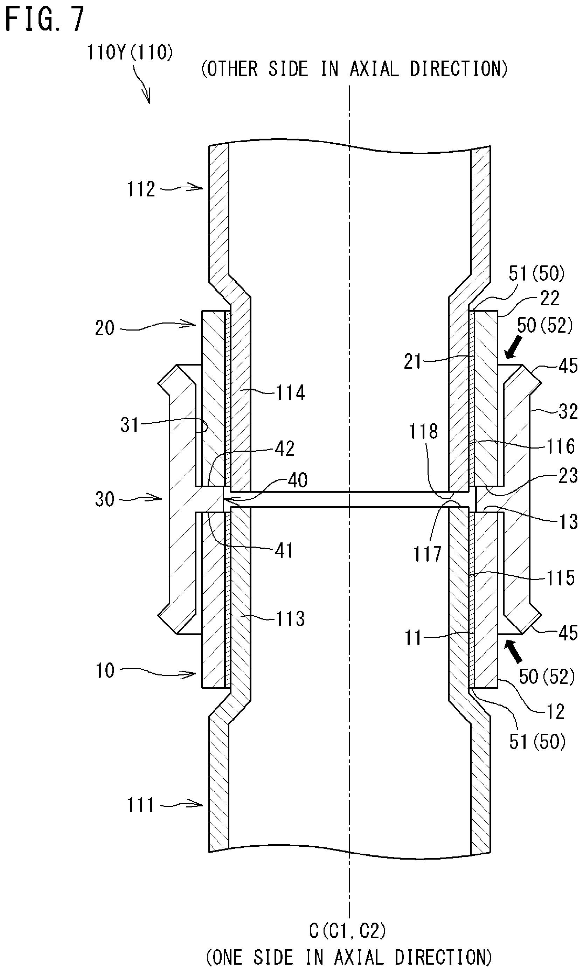

FIG. 7 is a schematic sectional view generally illustrating a status (during brazing) of the connection portion of the refrigerant pipe according to the second embodiment. Here, a method of brazing the connection portion 120 in the second refrigerant pipe 110Y will be described. As illustrated in FIG. 7, when the connection portion 120 is brazed in the second refrigerant pipe 110Y, the first connection portion 10 is inserted into the cylindrical third connection portion 30 from one side in the axial direction and the second connection portion 20 is inserted from the other side in the axial direction, and the central axis C1 of the first pipe 111 and the central axis C2 of the second pipe 112 are disposed to be coaxial. In the refrigerant pipe 110, the central axis C of the refrigerant pipe 110 coincides with the central axis C1 of the first pipe 111 and the central axis C2 of the second pipe 112. At this time, the first pipe 111 and the second pipe 112 are positioned in the axial direction by the protrusion 40.

Next, in this state, the brazing material 50 is inserted between the outer peripheral surface 12 and the outer peripheral surface 22, and the inner peripheral surface 31 to form the second brazing material layer 52. Thus, the first pipe 111 including the first connection portion 10 and the second pipe 112 including the second connection portion 20 can be joined via the third connection portion 30 by manually brazing with a burner. The connection portion 120 in the second refrigerant pipe 110Y is brazed manually with a burner, preferably in an orientation in which the central axis C is directed in a vertical direction as illustrated in FIG. 7. However, not limited to this orientation, the brazing may be performed in an orientation in which the central axis C is directed in a horizontal direction or an orientation in which the central axis C is inclined with respect to the vertical direction.

As illustrated in FIGS. 5 to 7, in the second refrigerant pipe 110Y, the third connection portion 30 has a flared portion 45 formed at an end in the axial direction. In the second refrigerant pipe 110Y having such a configuration, when the first connection portion 10 and the second connection portion 20 are brazed to the third connection portion 30, the molten brazing material 50 is easily poured between the outer peripheral surface 12 and the outer peripheral surface 22, and the inner peripheral surface 31. Therefore, in the second refrigerant pipe 110Y having such a configuration, manual brazing with a burner can be efficiently performed.

### [Functional effects of embodiments]

(1) The refrigerant pipe 110 (the first refrigerant pipe 110X and the second refrigerant pipe 110Y) according to the present embodiment constitutes the refrigerant circuit 103 of the refrigeration apparatus 100, and is the refrigerant pipe 110 through which a single refrigerant consisting of carbon dioxide or a mixed refrigerant containing carbon dioxide flows. The refrigerant pipe 110 includes the first pipe 111 made of stainless steel and having the first end 113, the second pipe 112 made of stainless steel and having the second end 114, and the connection portion 120 made of a material different from stainless steel and connecting the first end 113 and the second end 114. The connection portion 120 includes the first connection portion 10 joined to the outer peripheral surface 115 of the first end portion 113, the second connection portion 20 joined to the outer peripheral surface 116 of the second end portion 114, and the third connection portion 30 in which the inner peripheral surface 31 on the first pipe 111 side is joined to the outer peripheral surface 12 of the first connection portion 10 and the inner peripheral surface 31 on the second pipe 112 side is joined to the outer peripheral surface 22 of the second connection portion 20.

In the refrigerant pipe 110 having such a configuration, the first pipe 111 and the second pipe 112 made of stainless steel can be easily brazed manually by providing the connection portion 120 having a simple structure. Accordingly, such a configuration facilitates manual brazing work of pipes in the refrigerant pipe 110 made of stainless steel.

The refrigerant pipe 110 according to the present embodiment, which includes the third connection portion 30, can improve the pressure resistance strength of the connection portion 120. As a result, the refrigerant pipe 110 according to the present embodiment can secure the necessary pressure resistance strength for the refrigerant pipe 110 through which the single refrigerant consisting of carbon dioxide or the mixed refrigerant containing carbon dioxide flows.

(2) In the first refrigerant pipe 110X, the end surface 13 of the first connection portion 10 on the second connection portion 20 side is flush with the end surface 117 of the first pipe 111 on the second pipe 112 side, or protrudes toward the second pipe 112 side from the end surface 117 of the first pipe 111 on the second pipe 112 side, and the end surface 23 of the second connection portion 20 on the first connection portion 10 side is flush with the end surface 118 of the second pipe 112 on the first pipe 111 side, or protrudes toward the first pipe 111 side from the end surface 118 of the second pipe 112 on the first pipe 111 side.

In the first refrigerant pipe 110X having such a configuration, by reducing the gap between the first connection portion 10 and the second connection portion 20, it is possible to prevent the brazing material 50 from entering the inside of the first refrigerant pipe 110X from between the first connection portion 10 and the second connection portion 20 when the third connection portion 30 is brazed to the first connection portion 10 and the second connection portion 20.

(3) In the first refrigerant pipe 110X according to the first embodiment, the end surface 117 of the first pipe 111 is in contact with the end surface 118 of the second pipe 112.

The first refrigerant pipe 110X having such a configuration can prevent the brazing material 50 from entering the inside of the first refrigerant pipe 110X from between the first pipe 111 and the second pipe 112 when the third connection portion 30 is brazed to the first connection portion 10 and the second connection portion 20 by bringing the first pipe 111 and the second pipe 112 into contact with each other.

(4) In the second refrigerant pipe 110Y according to the second embodiment, the third connection portion 30 has the protrusion 40 protruding inward in the radial direction from the inner peripheral surface 31. The protrusion 40 has the first surface 41 formed on one side in the axial direction of the third connection portion 30 and the second surface 42 formed on the other side in the axial direction of the third connection portion 30. The first surface 41 faces the end surface 13 of the first connection portion 10 on the second connection portion 20 side, and the second surface 42 faces the end surface 23 of the second connection portion 20 on the first connection portion 10 side.

In the second refrigerant pipe 110Y having such a configuration, the first connection portion 10 and the second connection portion 20 can be positioned in the axial direction by the protrusion 40.

(5) In the second refrigerant pipe 110Y according to the second embodiment, the height H of the protrusion 40 protruding inward in the radial direction from the inner peripheral surface 31 of the third connection portion 30 is equal to or less than the thickness D1 and the thickness D2 of the first connection portion 10 and the second connection portion 20 in the radial direction (H ≤ D1 and H ≤ D2).

The second refrigerant pipe 110Y having such a configuration can prevent the protrusion 40 from coming into contact with the first pipe 111 and the second pipe 112. If the protrusion 40 is extended to the position in contact with the first pipe 111 and the second pipe 112, where to be positioned differs depending on a positional relationship between the end surfaces of the first pipe 111 and the second pipe 112 and the end surface of the connection portion 120. Therefore, by preventing the protrusion 40 from coming into contact with the first pipe 111 and the second pipe 112, the first connection portion 10 and the second connection portion 20 can be reliably positioned.

(6) In the second refrigerant pipe 110Y according to the second embodiment, the end surface 117 of the first pipe 111 protrudes toward the second pipe 112 side from the end surface 13 of the first connection portion 10 on the second connection portion 20 side, and the end surface 118 of the second pipe 112 protrudes toward the first pipe 111 side from the end surface 23 of the second connection portion 20 on the first connection portion 10 side.

The second refrigerant pipe 110Y having such a configuration can suppress a gap between the first pipe 111 and the second pipe 112. As a result, it is possible to prevent the brazing material 50 from entering the inside of the second refrigerant pipe 110Y through the gap.

(7) In the refrigerant pipe 110 according to the present embodiment, the third connection portion 30 has the flared portion 45 formed at the end in the axial direction.

In the refrigerant pipe 110 having such a configuration, when the first connection portion 10 and the second connection portion 20 are brazed to the third connection portion 30, the brazing material 50 is easily poured into the gap between the first connection portion 10 and the second connection portion 20, and the third connection portion 30.

(8) In the refrigerant pipe 110 according to the present embodiment, the axial length L3 of the third connection portion 30 is equal to or less than the sum of the axial length L1 of the first connection portion 10 and the axial length L2 of the second connection portion 20 (L3 ≤ L1+L2), and is equal to or greater than the axial length L1 of the first connection portion 10 and the axial length L2 of the second connection portion 20 (L3 ≥ L1 and L3 ≥ L2).

The refrigerant pipe 110 having such a configuration can efficiently perform brazing work between the first connection portion 10 and the second connection portion 20, and the third connection portion 30.

(9) The refrigeration apparatus 100 according to the present embodiment includes the refrigerant pipe 110 according to the present embodiment.

The refrigeration apparatus 100 having such a configuration can improve the pressure resistance strength of the connection portion 120 of the refrigerant pipe 110 by using the refrigerant pipe 110 having the third connection portion 30. As a result, the refrigeration apparatus 100 can be configured by using the refrigerant pipe 110 made of stainless steel that secures the pressure resistance strength required in the case of using a single refrigerant consisting of carbon dioxide or a mixed refrigerant containing carbon dioxide.

(10) The method of brazing the refrigerant pipe 110 according to the present embodiment is a method of brazing the refrigerant pipe 110 including the first pipe 111 made of stainless steel and having the first end 113, the second pipe 112 made of stainless steel and having the second end 114, and the connection portion 120 made of a material different from stainless steel and connecting the first end 113 and the second end 114, and through which a single refrigerant consisting of carbon dioxide or a mixed refrigerant containing carbon dioxide flows. In the method of brazing the refrigerant pipe 110 according to the present embodiment, the connection portion 120 includes a first connection portion 10 joined to the outer peripheral surface 115 of the first end portion 113, a second connection portion 20 joined to the outer peripheral surface 116 of the second end portion 114, and a third connection portion 30 in which the inner peripheral surface 31 on the first pipe 111 side is joined to the outer peripheral surface 12 of the first connection portion 10 and the inner peripheral surface 31 on the second pipe 112 side is joined to the outer peripheral surface 22 of the second connection portion 20. In the method of brazing the refrigerant pipe 110 according to the present embodiment, the first pipe 111 having the first connection portion 10 and the second pipe 112 having the second connection portion 20 are brazed via the third connection portion 30.

In the method of brazing the refrigerant pipe 110 according to the present embodiment, the first pipe 111 and the second pipe 112 made of stainless steel can be easily brazed manually by the connection portion 120 having a simple structure. Such a method of brazing the refrigerant pipe 110 facilitates manual brazing work of pipes in the refrigerant pipe 110 made of stainless steel.

In the method of brazing the refrigerant pipe 110 according to the present embodiment, the pressure resistance strength of the connection portion 120 can be improved by brazing the first connection portion 10 and the second connection portion 20 by using the third connection portion 30. Such a method of brazing the refrigerant pipe 110 can secure the necessary pressure resistance strength for the refrigerant pipe 110 through which the single refrigerant consisting of carbon dioxide or the mixed refrigerant containing carbon dioxide flows.

While the embodiments have been described above, it will be understood that various changes in forms and details can be made without departing from the gist and scope of the claims.

### REFERENCE SIGNS LIST

- 10: first connection portion
- 12: outer peripheral surface
- 13: end surface
- 20: second connection portion
- 22: outer peripheral surface
- 23: end surface
- 30: third connection portion
- 31: inner peripheral surface
- 40: protrusion
- 41: first surface
- 42: second surface
- 45: flared portion
- 100: refrigeration apparatus
- 103: refrigerant circuit
- 110: refrigerant pipe
- 110X: first refrigerant pipe
- 110Y: second refrigerant pipe
- 111: first pipe
- 112: second pipe
- 113: first end
- 114: second end
- 115: outer peripheral surface
- 116: outer peripheral surface
- 117: end surface
- 118: end surface
- 120: connection portion
- L1: axial length (of first connection portion)
- L2: axial length (of second connection portion)
- L3: axial length (of third connection portion)
- D1: thickness (of first connection portion) in radial direction
- D2: thickness (of second connection portion) in radial direction
- H: height (of protrusion)

## Claims

1. A refrigerant pipe (110) that constitutes a refrigerant circuit (103) of a refrigeration apparatus (100) and through which a single refrigerant consisting of carbon dioxide or a mixed refrigerant including carbon dioxide flows, the refrigerant pipe (110) comprising:
a first pipe (111) made of stainless steel and having a first end (113);
a second pipe (112) made of stainless steel and having a second end (114); and
a connection portion (120) made of a material different from stainless steel and connecting the first end (113) and the second end (114), wherein
the connection portion (120) includes
a first connection portion (10) joined to an outer peripheral surface (115) of the first end (113),
a second connection portion (20) joined to an outer peripheral surface (116) of the second end (114), and
a third connection portion (30) having an inner peripheral surface (31),
the inner peripheral surface (31) on the first pipe (111) side is joined to an outer peripheral surface (12) of the first connection portion (10), and
the inner peripheral surface (31) on the second pipe (112) side is joined to an outer peripheral surface (22) of the second connection portion (20).

2. The refrigerant pipe (110X) according to claim 1, wherein
an end surface (13) of the first connection portion (10) on the second connection portion (20) side is flush with an end surface (117) of the first pipe (111) on the second pipe (112) side, or protrudes toward the second pipe (112) side from the end surface (117) of the first pipe (111) on the second pipe (112) side, and
an end surface (23) of the second connection portion (20) on the first connection portion (10) side is flush with an end surface (118) of the second pipe (112) on the first pipe (111) side, or protrudes toward the first pipe (111) side from the end surface (118) of the second pipe (112) on the first pipe (111) side.

3. The refrigerant pipe (110X) according to claim 2, wherein the end surface (117) of the first pipe (111) is in contact with the end surface (118) of the second pipe (112).

4. The refrigerant pipe (110Y) according to claim 1, wherein
the third connection portion (30) has a protrusion (40) protruding inward in a radial direction from the inner peripheral surface (31),
the protrusion (40) has a first surface (41) formed on one side in the axial direction of the third connection portion (30) and a second surface (42) formed on another side in the axial direction,
the first surface (41) faces the end surface (13) of the first connection portion (10) on the second connection portion (20) side, and
the second surface (42) faces the end surface (23) of the second connection portion (20) on the first connection portion (10) side.

5. The refrigerant pipe (110Y) according to claim 4, wherein
a height (H) of the protrusion (40) from the inner peripheral surface (31) of the third connection portion (30) is
equal to or less than a thickness (D1, D2) of the first connection portion (10) and the second connection portion (20) in a radial direction.

6. The refrigerant pipe (110Y) according to claim 4 or 5, wherein the end surface (117) of the first pipe (111) protrudes toward the second pipe (112) side from the end surface (13) of the first connection portion (10) on the second connection portion (20) side, and the end surface (118) of the second pipe (112) protrudes toward the first pipe (111) side from the end surface (23) of the second connection portion (20) on the first connection portion (10) side.

7. The refrigerant pipe (110) according to claim 1 or 2, wherein the third connection portion (30) has a flared portion (45) formed at an axial end.

8. The refrigerant pipe (110) according to claim 1 or 2, wherein an axial length (L3) of the third connection portion (30) is less than or equal to a sum of an axial length (L1) of the first connection portion (10) and an axial length (L2) of the second connection portion (20), and is greater than or equal to the axial length (L 1) of the first connection portion (10) and the axial length (L2) of the second connection portion (20).

9. A refrigeration apparatus (100) comprising the refrigerant pipe (110) according to claim 1 or 2.

10. A method of brazing a refrigerant pipe (110) that includes
a first pipe (111) made of stainless steel and having a first end (113),
a second pipe (112) made of stainless steel and having a second end (114), and
a connection portion (120) made of a material different from stainless steel and connecting the first end (113) and the second end (114), and
through which a single refrigerant consisting of carbon dioxide or a mixed refrigerant including carbon dioxide flows, wherein
the connection portion (120) includes
a first connection portion (10) joined to an outer peripheral surface (115) of the first end (113),
a second connection portion (20) joined to an outer peripheral surface (116) of the second end (114), and
a third connection portion (30) having an inner peripheral surface (31),
the inner peripheral surface (31) on the first pipe (111) side is joined to an outer peripheral surface (12) of the first connection portion (10),
the inner peripheral surface (31) on the second pipe (112) side is joined to an outer peripheral surface (22) of the second connection portion (20), and
the method includes brazing the first pipe (111) including the first connection portion (10) and the second pipe (112) including the second connection portion (20) via the third connection portion (30).
